# EUROPEAN PATENT APPLICATION

(11) **EP 1 482 748 A2**
(43) Date of publication of application: **01.12.2004**
(21) Application number: 04102265.8
(22) Date of filing: 24.05.2004
(51) Int. Cl.: H04Q 7/32

(54) **Inbox caching of messages on a mobile terminal**

(30) Priority: 30.05.2003 US 475060 P; 06.04.2004 US 819394
(71) Applicant: Openwave Systems Inc., Redwood City, CA 94063 (US)
(72) Inventor: Wugofski, Theodore D., Fort Worth, Texas 76109 (US)
(74) Representative: Asquith, Julian Peter

(57) **Abstract**

In one embodiment, a method for operating a multi-media (MM) messaging device is provided. The method includes generating an MM request to a messaging component within a network; and before sending the MM request, determining if there is an MM entity stored locally in the messaging device that can be used as a response to the MM request.

## Description

### FIELD OF THE INVENTION

This invention relates to the sending and receiving of messages. In particular, the invention relates to the sending and receiving of messages using a mobile terminal.

### BACKGROUND

Today, mobile terminals, such as mobile telephones, Personal Digital Assistants (PDAs), pocket PC's, two-way pagers, etc., are commonly used to send and receive messages. The messages may be sent as Short Message Service (SMS) messages or as Multi-media Messaging Service (MMS) messages, for example.

SMS messages are text-based messages and have to be created or composed by a user of a mobile terminal. For example, the user may enter an address (e.g., mobile subscriber identification number) of a recipient of the message and a subject for the message. Once the SMS message is composed, the message can be sent to the recipient by pressing a "send" button on the mobile terminal. Since SMS messages are sent when the "send" button is pressed, the user is aware of when an SMS message is sent.

MMS messages generally include rich content such as graphics, objects, images, etc. A response message to an MMS message may include links embedded in the message. A user has no knowledge of the functionality of an embedded link. In some cases, selecting an embedded link may cause the mobile terminal to generate and send a new message to a network entity or element. For example, assume that a user has previously downloaded an image, called image number three, from a network element that stores a photo album that has five images. At a later time, the user may download another image, referred to as image number two, from the same network element. The downloaded image may include an embedded link that when selected by the user, causes the mobile terminal to automatically send a message to the network element requesting image number three, since image number three is the next image following image number two.

The message requesting image number three is a billable event. However, image number three may already have been stored in the mobile terminal, making the subsequent download thereof unnecessary. Thus, from the user's perspective, the user would be unhappy about having to pay for the further download of image number three. From the network operator's perspective, valuable network bandwidth is used by having to perform the further download of image number three which could have been avoided by retrieving images from a storage of the mobile terminal.

Thus, there is a need to prevent requests from a mobile terminal to a network element for information that is already on the mobile terminal.

### SUMMARY OF THE INVENTION

In one embodiment, the invention provides a method for operating a multi-media (MM) messaging client. In the method, an MM request is generated to a messaging component within a network. But before sending the MM request to the network component, the messaging client determines if there is a MM message stored locally in the messaging client that can be used as a response to the MM request. If such an MM request is found, then according to some embodiments, the MM request is not sent to the network component, instead the MM message stored locally in the messaging client is used as a response to the request.

### BRIEF DESCRIPTION OF THE DRAWINGS

Figure 1 of the drawings shows a block diagram of a network architecture within embodiments of the present invention may be practiced;

Figure 2 shows the network architecture of Figure 1, in which a schematic drawing of a mobile originated (MO) message being sent from a mobile terminal to a messaging relay/server is shown, in accordance with one embodiment;

Figure 3 shows the network architecture of Figure 1, in which a schematic diagram of a network originated (NO) message that is generated in response to the (MO) message, in accordance with one embodiment is shown;

Figure 4 shows the network architecture of Figure 1, in which a schematic drawing of a message reference generated by a mobile terminal, in accordance with one embodiment of the invention is shown;

Figure 5 illustrates how the message reference of Figure 4 is used to wide-sending requests for information already stored on the mobile terminal; and

Figure 6 illustrates an example of hardware that might be used to implement a mobile terminal, in accordance with one embodiment of the invention.

### DETAILED DESCRIPTION

According to the techniques disclosed herein, before sending a new multi-media (MM) request to a messaging component on a network, a local message store or cache of an MM messaging device is first searched to determine if there is a stored MM message that can be used as a valid response to the new MM request. If there is such a stored MM request then the new MM request is not sent to the messaging component, thereby, advantageously, avoiding possible double billing for the information contained in the stored MM message.

Additionally, the techniques disclosed herein improve user experience by reducing the latency experience between MM requests and MM responses, since the MM response is retrieved from a local store or cache instead of having to be retrieved over a network. Another advantage of the techniques disclosed herein is that valuable network bandwidth may be conserved by avoiding generating multiple requests for the same information over a network. Other advantages of the techniques disclosed herein will be apparent from the description below.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

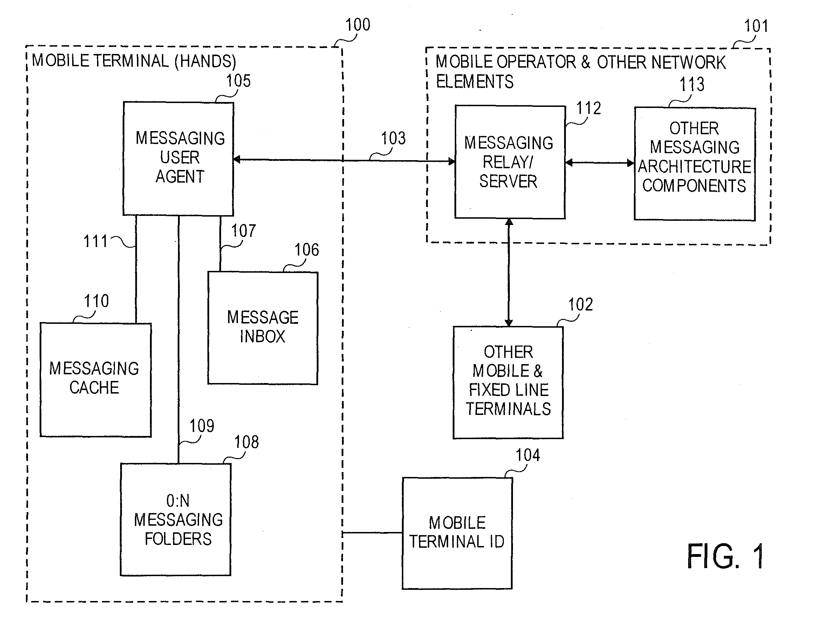

Figure 1 of the drawings shows a high-level block diagram of a network architecture within which embodiments of the invention may be practiced. Referring to Figure 1, reference numeral 100 indicates an MM device in the form of a mobile terminal such as a mobile telephone, a personal digital assistant (PDA), a pocket personal computer (PC), a two-way pager, etc. A collection of network elements 101 provides messaging functions to the mobile terminal 100 and other mobile or fixed terminals 102.

The mobile terminal 100 interfaces to the network elements 101 using a defined protocol 103. In one embodiment, the Third Generation Partnership Project (3GPP 23.140) specification defines this protocol, but other messaging protocols, such as Internet Engineering Task Force (IETF) Request for Comment (RFC) 2822, may be used. The mobile terminal 100 has one or more unique identifiers 104 that allow a network element to uniquely identify the mobile terminal and send messages or other data to that terminal. In one embodiment, the ITU E.164 numbering scheme (a phone number) is used to identify and address the mobile terminal 100.

The mobile terminal 100 contains a messaging user agent 105 that defines a mechanism for a user to compose, send, read, reply, forward, and store messages either on the mobile terminal itself or in the network. Those skilled in the art will be familiar with what types of functions the messaging user agent provides.

The messaging user agent 105 includes a message inbox 106 where messages sent to the mobile terminal are stored by the messaging user agent and an interface 107 between the messaging user agent 105 and the inbox 106.

In one embodiment, the user agent 105 includes one or more folders 108 which the user agent may use for storing messages and an interface 109 between the messaging user agent 105 and the folders 108.

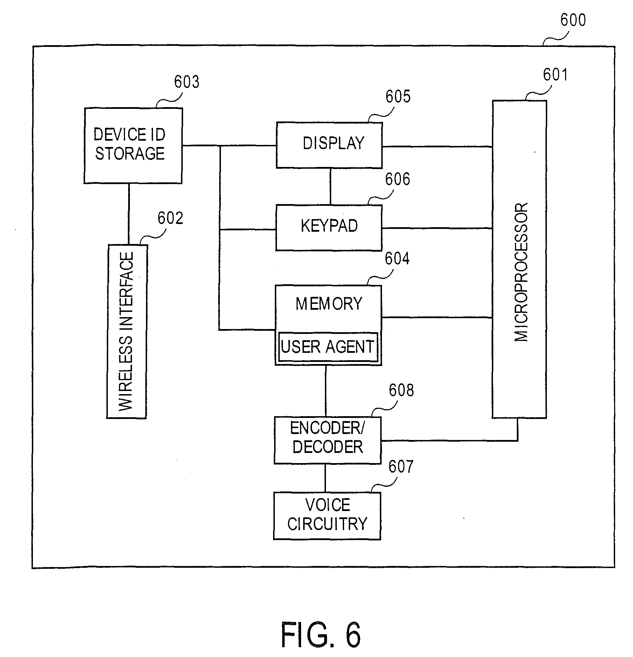

In one embodiment, the messaging user agent 105 includes a messaging cache 110 and an interface 111 between the messaging user agent 105 and the cache 110. Figure 6 of the drawings shows an example of hardware 600 that may be used to implement the mobile terminal 100.

The network elements 101 typically comprise a messaging relay or messaging server 112 and other messaging architectural elements 113 that form a mobile network. These additional messaging architectural elements may include storage devices, messaging application servers, or bridges to other mobile networks.

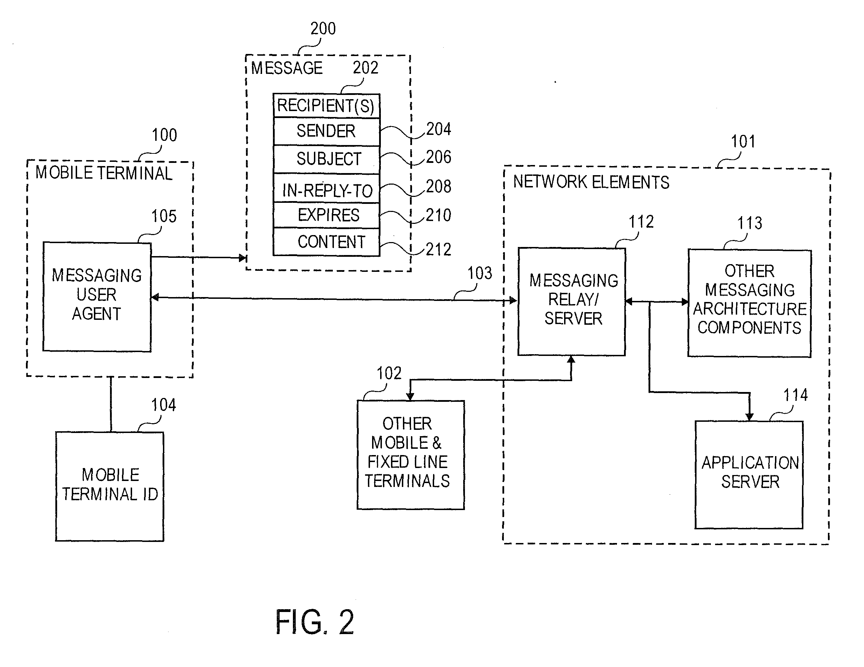

When the messaging user agent 104 wants to send a message from the mobile terminal 100 to a network element 113 or another terminal 102, the messaging user agent 105 creates a message 200 (see Figure 2 of the drawings) and sends the message using the protocol specified by the interface 103 between the mobile terminal and the messaging relay/server 112.

The interface 103 may also specify the format and services that are permitted within a message in order to ensure interoperability between different mobile terminals and network elements. In one embodiment, the message 200 includes message content 212, and five messaging services or headers.

These headers include a recipient address header 202 that specifies the address(es) where the message should be sent. Typically, the recipient address header will be a terminal identifier, such as an E.164 number, or an email address, such as a RFC 2822 mailbox.

A sender address header 204 that specifies the address of the sender is also included in the message 200. In one embodiment, the sender address header 204 is the mobile terminal ID 215 or an E.164 compliant phone number.

The headers also include a subject header 206 that provides a user-defined description of the contents of the message. If the message was in response to another message, this information may be stored in an "in-reply-to" header 208. The "expires" header 210 provides a date, time, or duration that indicates when the message is no longer valid.

When the messaging relay/server 112 receives the message 200 over interface 103, the messaging relay/server 112 uses the headers to determine what to do with the message. Typically, the messaging relay/server 112 sends the message 200 to a mobile or fixed line terminal 102 specified by the recipient address header 202. However, some network elements may also be addressed by the message and the message 200 is sent to these network elements 113, 114. For example, a network element 113 or an application server 114 could have a valid recipient address and the messaging relay/server 112 will send the message 200 to the network element 113 or the application server 114, as the case may be.

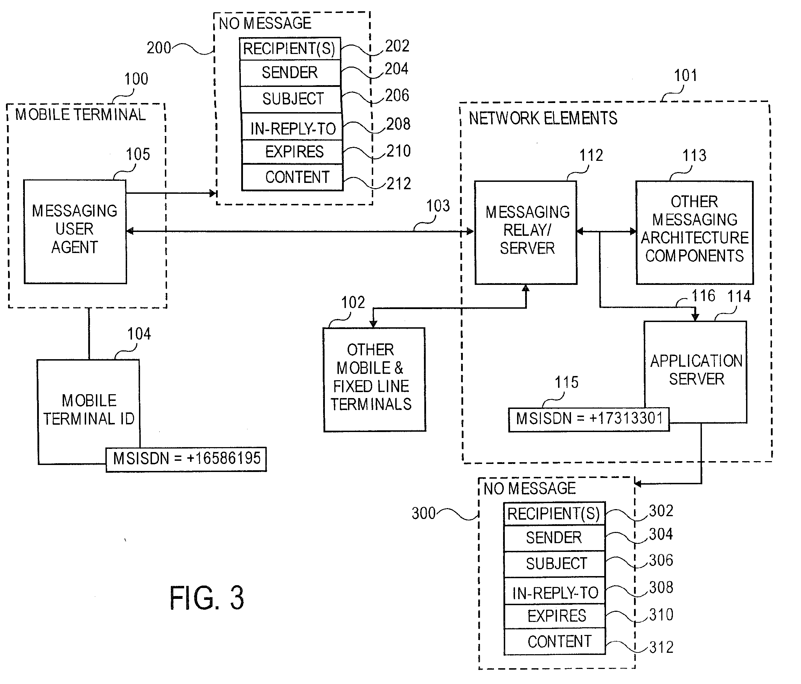

For network elements 101 that provide messaging applications to mobile terminals, each service provided by an application server 114 must have an address 115 (see Figure 3) that is known by the messaging relay/server 112. When the mobile terminal 100 wants to use the service, the messaging user agent 105 sends a mobile-originated (MO) message 200 with the recipient address 202 assigned to the address of the desired service, and the sender's address 204 assigned to the address of the mobile terminal 104. The MO message 200 subject field 306, or some other field in the message, may contain information pertaining to the desired service. For example, if the service provides a weather forecast, the subject field may contain the zip code for the area for which the forecast is desired.

The MO message 200 is sent over the interface 103 between the mobile terminal 100 and the messaging relay/server 112, and subsequently sent to application server 114 over an interface 116 between the messaging relay/server 112 and the application server 114, as can be seen from Figure 3 of the drawings.

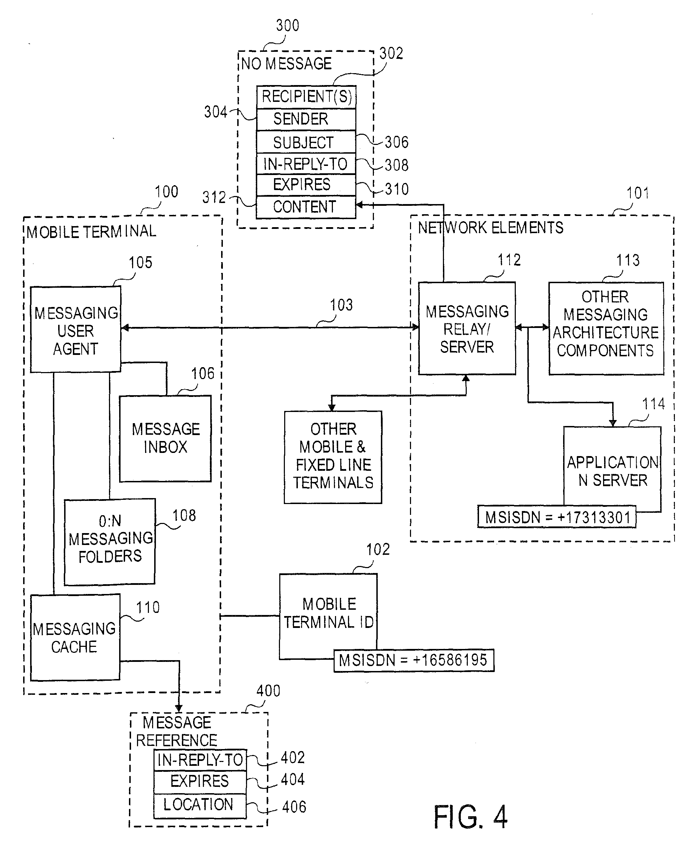

The application server 114 may then generate a "reply" network-originated (NO) message 300 (see Figure 4 of the drawings) to the mobile-originated message 200 that contains the desired service-level information or content 312, such as the weather forecast for the specified zip code. The NO message 300 is sent to the messaging relay/server 112.

The message 300 includes a recipient field 302 that contains the address of the MO message's sender 206, a sender field 304 that contains the address of the service, and a subject field 306 that includes service-generated information.

In one embodiment, the message 300 includes an in-reply-to field 308 that contains information that is computationally related to the original request in the MO message 200. In other words, the messaging user agent 105 can look at the in-reply-field 308 and match it with the MO message 200 that it previously sent.

In one embodiment, the in-reply-to field 308 combines the MO message's recipient address 304 and the subject field 306, but other "signatures" can be supported.

The message 300 also includes "expires" field 310 that contains information that indicates the period of time for which the NO message content 312 is valid. For example, a weather forecast may be valid for 4 hours or until 12 noon.

Once the messaging relay/server 112 receives the NO message 300 from the application server 114, it sends the NO message to the mobile terminal 100 specified by the recipient field 302 over the interface 103 between the messaging relay/server 112 and the messaging user agent 105.

When the messaging user agent 105 receives the NO message 300, it places the NO message into its message inbox 106 or some other storage area such as the messaging folders 108.

As can be seen from Figure 4 of the drawings, in one embodiment, the messaging user agent 105 also stores a reference 400 to the NO message 300 stored in the message inbox 106 or folder 108 in a messaging cache 110. The reference 400 includes data that can computationally refer back to the original MO message - such as the in-reply-to field 308, the expiration date and time for the message 404, and a location 406 at which the actual NO message is stored - such as the inbox or folder name.

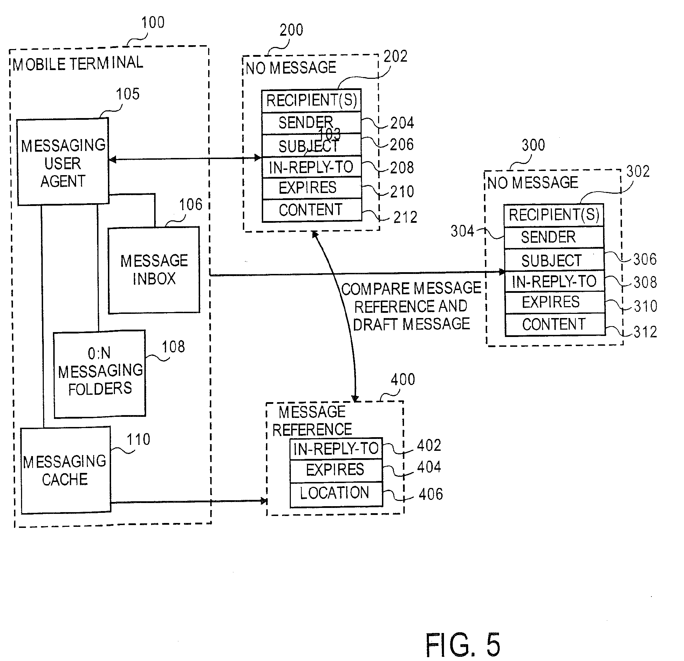

As can be seen from Figure 5 of the drawings, in one embodiment, when the mobile terminal 100 wants to send another message to a service, the messaging user agent 105 compares the draft (unsent) MO message 200 with the contents of the messaging cache 110.

In one embodiment, the messaging user agent 105 examines the message references 400 in the messaging cache 110 to determine whether the same MO message had been previously sent and received by the mobile terminal. In one embodiment, the recipient address 202 and the subject 206 define a signature that will match the in-reply-to field 402 in the message reference 400, if the draft message 200 had been previously sent.

If a matching message reference is found - the in-reply-to field 402 matches the recipient address 202 and subject fields 206 - the messaging user agent then determines if the corresponding NO message stored in the inbox 106 or the folder 108 has expired. This is done by looking at either the expiration date and time 404 in the message reference 400 or the expiration date and time 310 in the NO message 300.

Alternative implementations might periodically remove all expired message references, so that this step would not need to occur. In one embodiment, the messaging user agent 105 would remove the expired message reference 400 without removing the actual message 300, but one skilled in the art will understand that a messaging user agent might additionally provide an end-user with the ability to automatically remove or delete expired messages.

If the matching message reference 400 has not expired, instead of sending the draft MO message 200, the message user agent 105 notifies the user that a valid MM entity or response already exists. There are numerous ways in which this can occur. For example, the messaging user agent can generate a message that appears to be a NO message (so the user thinks a new response has been received), the user agent could generate a graphical user interface that indicates that a response exists and queries the user whether to use the existing response or ignore it and request a new response anyway, or the user agent could simply display the existing stored NO message. A person skilled in the art would understand how to use the message reference 400 location 406 to access the stored NO message 300.

When the messaging user agent 105 moves a NO message 300 from the inbox 106 to a folder 108 or between folders, the messaging user agent 105 updates the appropriate message reference 400 location field 406 to reflect the new location of the NO message 300. When the messaging user agent 105 deletes a NO message 300 from the mobile terminal 100 altogether, the matching message reference 400 is also deleted.

Referring to Figure 6 of the drawings, an example of hardware 600 that may be used to implement the mobile terminal 100, in accordance with one embodiment, is show schematically. The hardware 600 includes a processor 601 which may be or include any of: a general-or-special purpose programmable microprocessor, Digital Signal Processor (DSP), Application Specific Integrated Circuits (ASIC), Programmable Logic Array (PLA), Field Programmable Gate Array (FBGA), etc., or a combination thereof. The hardware 600 includes a wireless interface 602 that couples to a carrier network to receive incoming and outgoing signals. Device identifier (ID) storage 603 stores and supplies to the wireless interface 602 a device ID which identifies hardware 600 to outside entities (e.g. a network element 101).

In addition, the hardware 600 includes a memory 604 that stores data and/or software for performing many of the processing tasks performed by the hardware 600 when executed by the processor 601. The software includes the user agent 105, described above. The memory 604 may represent one or more physical memory devices, which may include any type of Random Access Memory (RAM), Read-Only Memory (ROM), (which may be programmable), flash memory, non-volatile mass storage device or a combination of such memory devices. The memory 604 is coupled to the wireless interface 602 for the establishment of the communications sessions with outside entities above. The hardware 600 further includes a display 605, a keypad 606, voice circuitry 607 for inputting and outputting audio, and an encoder/decoder 608 coupled between processor 601 and voice circuitry 607 for encoding and decoding audio signals.

In general, the routines executed to implement the embodiments of the invention, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations necessary to execute elements involving the various aspects of the invention. Moreover, while the invention has been described in the context of fully functioning computers and computer systems, those skilled in the art will appreciate that the various embodiments of the invention are capable of being distributed as a program product in a variety of forms, and that the invention applies equally regardless of the particular type of machine or computer-readable media used to actually effect the distribution. Examples of computer-readable media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Although the present invention has been described with reference to specific exemplary embodiments, it will be evident that the various modifications and changes can be made to these embodiments without departing from the broader spirit of the invention. Accordingly, the specification and drawings are to be regarded in an illustrative sense rather than in a restrictive sense.

## Claims

1. A method for operating a multi-media (MM) messaging device, the method comprising:
generating an MM request to a messaging component within a network; and
before sending the MM request, determining if there is an MM entity stored locally in the messaging device that can be used as a response to the MM request.

2. The method of claim 1, further comprising presenting the MM entity to a user of the MM messaging device, in which case the MM request is not sent to the messaging component.

3. The method of claim 2, wherein presenting the MM entity to the user comprises presenting the MM entity to the user as though it were a response to the MM request, had the MM request been sent to the messaging component, there being no notification to the user that the MM request was not sent.

4. The method of claim 2, wherein presenting the MM entity to the user comprises notifying the user of the MM entity, and prompting the user for input on whether to use the MM entity, or to send the MM request to the messaging component.

5. The method of claim 4, further comprising receiving the input of the user and displaying the MM entity to the user or sending the MM request to the messaging component based on the input.

6. A method for operating a multi-media (MM) messaging device, the method comprising:
receiving an MM message at the messaging device;
if the MM message is related to an MM request sent by the messaging device then storing the MM message; and
determining if each new MM request is related to the stored MM message before sending the new MM request to a messaging component within a network.

7. The method of claim 6, further comprising presenting the stored MM request to a user of the MM messaging device as a response to the new MM request from the messaging component.

8. The method of claim 6, further comprising notifying a user of the MM messaging device of the existence of the stored MM message, and prompting the user for input on whether to use the stored MM message, or to send a new MM request to the messaging component.

9. The method of claim 6, wherein the MM message is related to the MM request if the MM message is in reply to a similar request sent earlier to the messaging component from the messaging device.

10. The method of claim 9, wherein storing the MM message comprises storing a reference to the MM message that relates the MM message to the similar MM request sent earlier.

11. The method of claim 10, wherein determining if each new MM request is related to the stored MM requests comprises, determining if the stored reference to the MM message is related to the new MM request.

12. A mobile terminal, comprising:
a processor; and
memory coupled to the processor, the memory storing instructions which when executed by the processor, cause the mobile terminal to perform a method comprising:
generating an MM request to a messaging component within a network; and
before sending the MM request, determining if there is a MM entity stored locally in the mobile terminal that can be used as a response to the MM request.

13. The mobile terminal of claim 12, wherein the method further comprises presenting the MM entity to a user of the mobile terminal, in which a case the MM request is not sent to the messaging component.

14. The mobile terminal of claim 13, wherein presenting the MM entity to the user comprises presenting the MM entity to the user as though it were a response to the MM request, had the MM request been sent to the messaging component, there being no notification to the user that the MM request was not sent.

15. The mobile terminal of claim 13, wherein presenting the MM entity to the user comprises notifying the user of the MM entity, and prompting the user for input on whether to use the MM entity, or to send the MM request to the messaging component.

16. The mobile terminal of claim 15, wherein the method further comprises receiving the input of the user and displaying the MM entity to the user or sending the MM request to the messaging component based on the input.

17. A mobile terminal, comprising:
a processor; and
a memory coupled to the processor, the memory storing instructions which when executed by the processor, cause the mobile terminal to perform a method comprising:
receiving an MM message;
if the MM message is related to an MM request sent by the mobile terminal then storing the MM message; and
determining if each new MM request is related to the stored MM message before sending the new MM request to a messaging component within a network.

18. The mobile terminal of claim 17, wherein the method further comprises presenting the stored MM request to a user of the mobile terminal as a response to the new MM request from the messaging component.

19. The mobile terminal of claim 17, wherein the method further comprises notifying a user of the mobile terminal of the existence of the stored MM message, and prompting the user for input on whether to use the stored MM message, or to send a new MM request to the messaging component.

20. The mobile terminal of claim 17, wherein the MM message is related to the MM request if the MM message is in reply to a similar request sent earlier to the messaging component from the mobile terminal.

21. The mobile terminal of claim 20, wherein storing the MM message comprises storing a reference to the MM message that relates the MM message to the similar MM request sent earlier.

22. The mobile terminal of claim 21, wherein determining if each new MM request is related to the stored MM requests comprises, determining if the stored reference to the MM message is related to the new MM request.
